# EUROPEAN PATENT APPLICATION

(11) **EP 1 170 202 A1**
(43) Date of publication of application: **09.01.2002**
(21) Application number: 01114740.2
(22) Date of filing: 22.06.2001
(51) Int. Cl.: B62K 25/30

(54) **A bicycle frame with rear wheel suspension**

(30) Priority: 28.06.2000 IT TO000636
(71) Applicant: Rolle, Adriano, 10080 Rivara Canavese (Torino) (IT)
(72) Inventor: Rolle, Adriano, 10080 Rivara Canavese (Torino) (IT)

(57) **Abstract**

A main frame (10) has a cylindrical seat (18) for rotatably receiving a horizontal bottom bracket axle (25) of the pedal assembly. A rear framework (11) for the rear wheel is mounted for oscillation on the main frame (10) about a transversal horizontal axis, with a shock absorber (24) interposed between the main frame (10) and the rear framework (11). The rear framework (11) is lowerly pivotally mounted to the main frame (10) about the axis (x) of the bottom bracket axle (25).

## Description

The present invention relates to a bicycle frame of the type defined in the preamble to Claim 1.

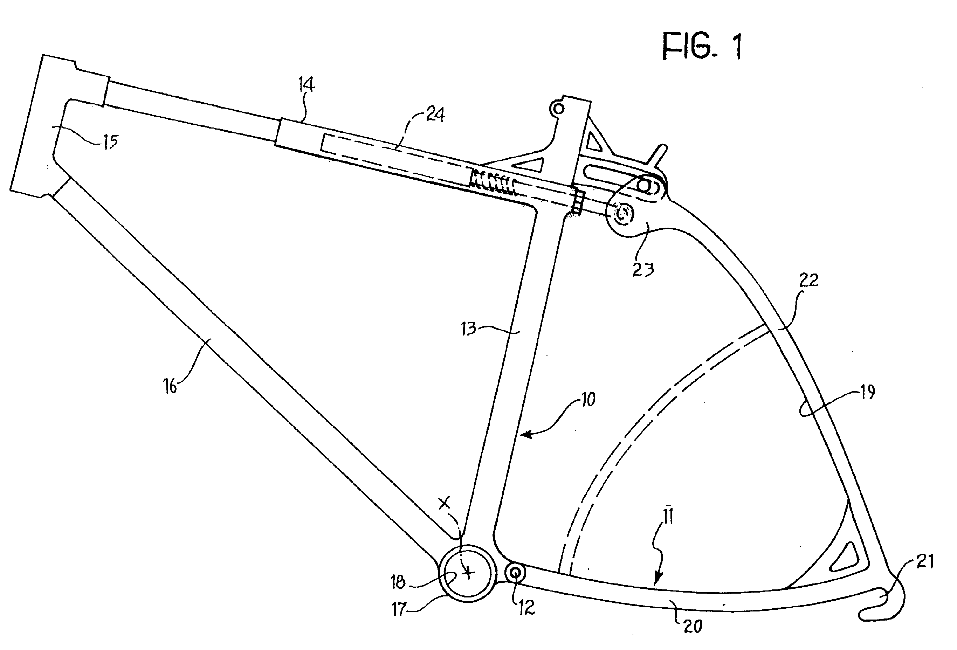

For a better understanding of the state of the art and the problems inherent thereto, a conventional bicycle frame with a rear wheel suspension will be described at first, referring to figure 1 of the attached enclosed drawings.

In figure 1, a bicycle frame includes a main frame 10 and a rear framework or fork 11 pivoted lowerly 12 to the main frame. The main frame 10 comprises an essentially vertical seat tube 13 which extends from the region of the pedals to that of the seat, a substantially horizontal crossbar 14 which extends from the region of the seat to the region of the handle bar and forms a 90° angle with the crossbar 14, a vertical head tube 15 and an inclined down tube 16. In the lower zone at the junction of tubes 16 and 13, the main frame 10 forms a sleeve 17 with a cylindrical seat 18 in which the horizontal bottom bracket axle (not shown) of the pedals is rotatably mounted.

The rear frame 11 includes a pair of V-shaped arms 19 securely fixed to each other and arranged on each side of the rear wheel; in the side view of Figure 1 only one V-shaped arm is shown, of which a lower or chain stay 20 extends from the pivot point 12 to a seat 21 in which the rear wheel hub (not shown) is rotatably mounted, and an oblique or seat stay 22 extends obliquely from the seat 21 to form an upper head 23. A shock absorber device, schematically shown 24, is interposed between the main frame 10 and the rear framework 11. In the example shown in figure 1, the shock absorber 24 is housed within the crossbar 14 of the main frame 10.

Examples of such prior art are given in EP-A-1 060 979 to the same Applicant, and U.S. patent No. 5.772.228, in which the shock absorber is integral with a tube of the frame. In other more diffused solutions, the shock absorber is fitted on the outside of the frame, for example underneath the crossbar extending from the zone of the seat to that of the handlebar.

Bicycle frames in accordance with the above cited solutions have a drawback owing to the scarce rigidity offered by the frame in respect of force components acting perpendicularly to the vertical, longitudinal plane of the frame, especially when the bicycle is travelling on uneven ground. The two points which are most subjected to forces or force components acting perpendicularly to the aforesaid plane, and therefore where breaking is most likely to occur, are the seat 18 for the pedal assembly and the hinge 12 of the rear framework.

It is therefore an object of the present invention to provide a strong bicycle frame with high structural rigidity having reduced weight and dimensions in comparison with conventional frames with a rear wheel suspension.

It is another object of the invention to provide a frame which allows to reduce those oscillations of the rear framework with respect to the main frame which are provoked by the rider pedalling, and so reduce the amount of energy wasted by the rider and absorber by the shock absorber.

These and other objects and advantages, that will be better understood herein after are achieved, in accordance with the present invention, by a bicycle frame having the features defined in claim 1. Preferred embodiments of the invention are defined in the dependent claims.

The characteristics and advantages of the invention will become apparent from the following detailed description of a preferred embodiment thereof, with reference to the appended drawings, provided purely by way of non-limiting example, in which:
- figure 1 is a side view of a bicycle frame of known kind with a suspension for the rear wheel;
- figure 2 is a side view of a bicycle frame according to the present invention;
- figure 3 is a front view of the bottom bracket axle mounted in a rotatable bushing;
- figure 4 is a side view of a sleeve formed by the frame and in which there are mounted the components shown in figure 3 and other components shown in figure 5;
- figure 5 is an exploded view of the sleeve of the frame of figure 4 and other components to be fitted therein;
- figure 6 is a top view according to the line VI-VI in figure 2; and
- figure 7 is a side view of the front part of one of the arms of the rear framework.

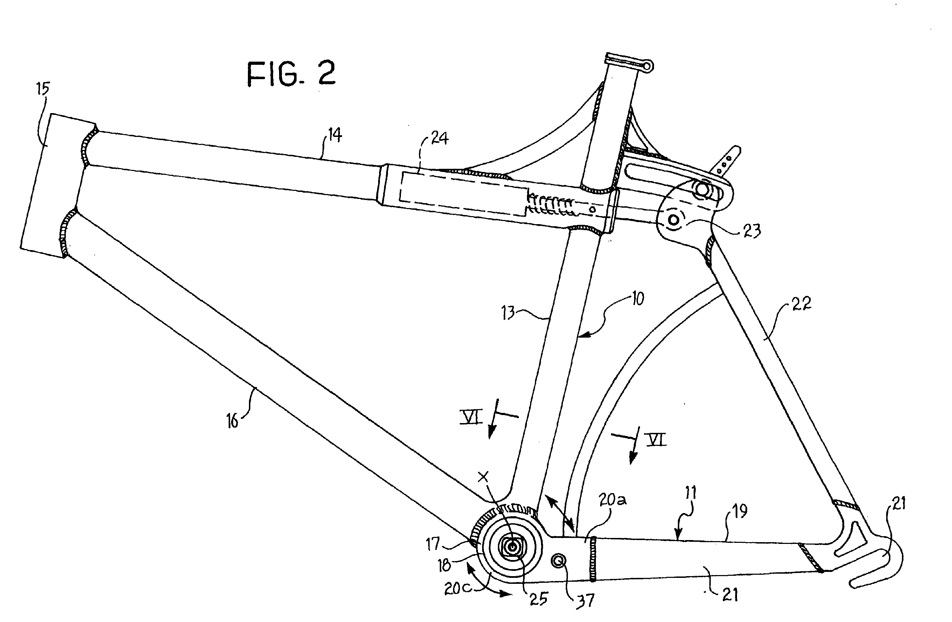

The general structure of the frame shown in figure 2 may be considered generally known. Only the elements of specific importance and interest for the purposes of the implementation of the present invention will therefore be described in detail in the following description. For the construction of the parts and elements not shown in detail, reference may therefore be made to any known bicycle frame with a rear wheel suspension.

Referring now to figures 2 to 4, and using the same reference numerals already used for designating corresponding parts in figure 1, the main frame 10 forms a cylindrical seat 18 for receiving a bottom bracket axle 25 rotated by the pedal cranks (not shown) about a transversal horizontal axis x.

An important characteristic of invention is that the rear framework 11 is lowerly pivoted to the main frame 10 about the axis x of the axle 25, as explained herein after.

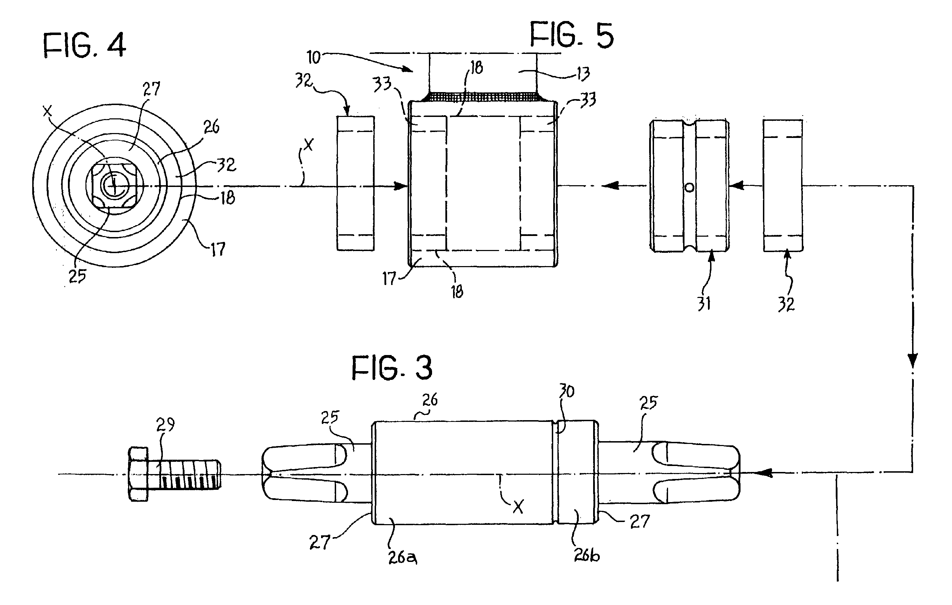

As shown in figure 3, the axle 25 is mounted coaxially and rotatably in a bushing 26. Between the bushing 26 and the axle 25 there is interposed a pair of rolling bearings (not shown) disposed side by side, for example a pair of rolling bearings each having a single set of rolling balls. At the opposite axial ends of the bushing 26 there are provided sealing devices schematically designated 27 in figure 4, for hermetically sealing the inner parts of the bushing where the aforesaid bearings are housed.

It should be noted that, as used herein, the terms "transversal", "radial" and "longitudinal" are to be interpreted with reference to the transversal axis x of the bottom bracket axle 25.

Still referring to figure 3, the end portions of the axle 25 have outer surfaces shaped in conventional manner for attachment to the pedal cranks (not shown) and threaded end holes for receiving fastening screws for the pedal cranks. Formed in the outer surface of the bushing 26 is a side groove 30 which serves as a reference for identifying that side (to the right in figure 3) of the axle 25 that is to be fitted at the side of the chain wheels (not shown). On this side, as known, the axle 25 protrudes by a greater distance for supporting the chain wheels immediately at the side of the right crank.

With reference also to figure 5, the bushing 26 is mounted in a bearing 31, preferably a roller bearing, which is forcedly inserted with radial interference in the central part of the cylindrical seat 18 of the main frame 10. At either side of the bearing 31 an annular sealing member 32, preferably of anti-friction material such as PTFE (Teflon), is fitted so as to close the gap 33 between the outer surface of the bushing 26 and the seat 18 which houses the bearing 31.

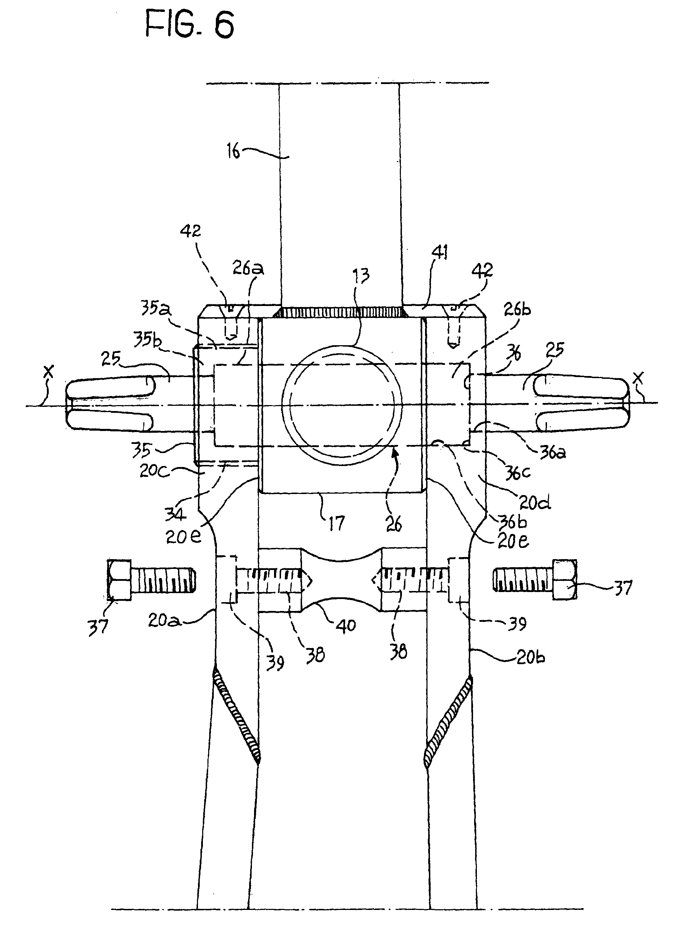

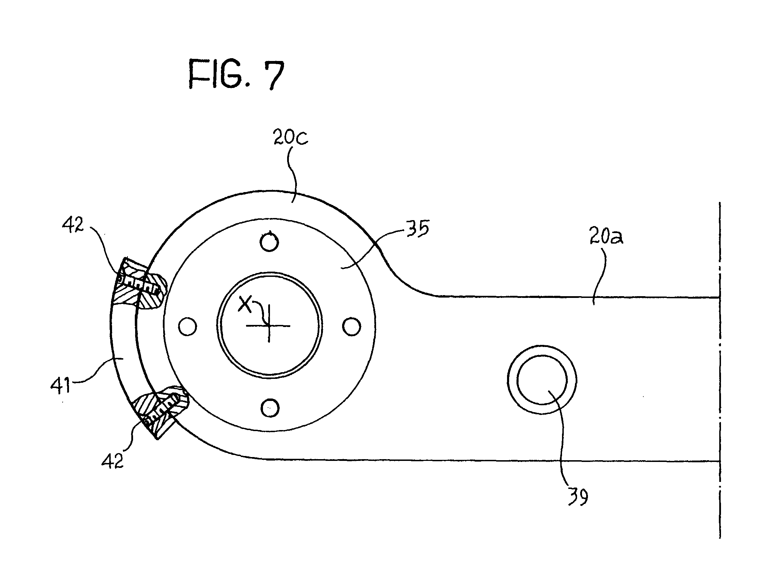

With reference now to figures 6 and 7, the lower stays 20 of the rear framework 11 comprise lever-shaped front portions 20a, 20b with head end portions 20c, 20d pivotally mounted about the axis x of the axle 25.

As shown in figure 6, the bushing 26 has a transversal dimension greater than that of the cylindrical seat 18 so as to have its axial end portions 26a, 26b projecting from either side of the sleeve 17 and the seat 18 in the assembled condition.

In the left head 20c there is formed a threaded through bore 34 which is inserted over the left end portion of axle 25 and on the left end portion 26a of the bushing 26 which projects out of the seat 18. A locking ring nut 35 with a tubular portion 35a and a radial portion 35b is screwed into the threaded bore 34. The outer surface of the tubular portion 35a is threaded so as to couple with the thread of the bore 34 in such manner that the radial portion 35b constitutes an outer axial shoulder for the left end portion 26a of the bushing 26.

In the right head 20d there is instead formed a two-diameter through bore 36 defining an outer bore portion 36a of smaller diameter from which the right end portion of the axle 25 protrudes, an inner bore portion 36b which accommodates the right end portion of the bushing 26, and a radial surface 36c constituting an axially outer shoulder for the right end portion of the bushing 26.

Owing to this arrangement, the rear framework or fork 11 is pivotally mounted about the axis x of the bottom bracket axle 25, and oscillates on the rotatable bushing 26 when the rear wheel is urged vertically upwards or downwards.

In accordance with some variant embodiments of the invention, both the left and right heads may be made like the head 20c with a threaded bore 34 for receiving a ring nut 24, or like the head 20d with a two-diameter bore 36.

The front stays 20 are rigidly connected to one another by means of fastening screws 37 which are inserted in holes 39 of the lever portions 20a, 20b, so as to couple in threaded manner in threaded recesses 38 formed in the opposite ends of a rigid spacer member 40 having a length corresponding to that of the seat 18 of the main frame 10. The length of the spacer 40 is preferably chosen to be such that, when the assembly is mounted (figure 6), the axial shoulders 36c and 35b rest against the sides of the rotatable bushing 26, whilst the inner sides 20e of the heads 20c, 20d are somewhat spaced apart form the sleeve 17 so as not to slide against it as the rear framework oscillates. In the example of figure 6, the holes 39 have a two-diameter shape and the fastening screws 37 are of the allen type so that their heads do not protrude from the stays 20 in the assembled condition.

The left and right V-shaped arms are further secured by welding to a transversal stiffening member (not shown) located at a certain distance from the heads 23 of the inclined stays 22.

As shown in figures 6 and 7, to further stiffen the connection between the two arms 19, the front end portions of the heads 20c, 20d may be joined by an arched reinforcement plate 41 fastened by screws 42.

It will be appreciated that the frame of the present invention, in which the fulcrum of the pedal assembly and the oscillation axis of the rear framework are coincident, renders the bicycle frame more rigid, reducing the risk of breaks. The pedalling movement is more regular, and the distance between the axes of the rear wheel hub and the bottom bracket axle is shorter as compared to the prior art solutions discussed in the introductory part of the description, whereby the bicycle becomes shorter, lighter and more handy.

Further, it will be appreciated that, owing to the present invention, the distance between the rear wheel hub and the bottom bracket axle, which is fast with the chain wheels, is constant. Therefore, as the rear framework or fork oscillates, such oscillations do not cause the chain (not shown) to grow longer or shorter. As a result, the chain tightening device, normally provided for with all bicycles with gears, will be less stressed.

Naturally, the principle of the invention remaining the same, the details of construction and forms of embodiment may be varied widely with respect to those described and illustrated purely by way of non-limiting example. For example, the bearing 31 in which the bushing 26 is mounted may be replaced by one or more bearing rings made of a low friction material or by other mechanically equivalent solutions, as known to those skilled in the art.

## Claims

1. A bicycle frame, comprising:
a main frame (10) with a cylindrical seat (18) for rotatably receiving a horizontal bottom bracket axle (25) of the pedal assembly,
a rear framework (11) for the rear wheel mounted for oscillation on the main frame (10) about a transversal horizontal axis,
at least one resilient means (24) interposed between the main frame (10) and the rear framework (11);
**characterised in that** the rear framework (11) is lowerly pivotally mounted to the main frame (10) about the axis (x) of the axle (25).

2. A bicycle frame according to claim 1, **characterised in that** the axle (25) is rotatably mounted in a bushing (26), the bushing being in turn rotatably mounted in the cylindrical seat (18).

3. A bicycle frame according to claim 2, **characterised in that** the bushing (26) has a transversal dimension exceeding that of the cylindrical seat (18) so as to provide end portions (26a, 26b) projecting from either side of the seat (18) when assembled.

4. A bicycle frame according to claim 2, **characterised in that** the bushing (26) is rotatably mounted in the cylindrical seat (18) by means of at least one bearing (31).

5. A bicycle frame according to claim 4, **characterised in that** the bearing (31) is forcedly fitted in the cylindrical seat (18).

6. A bicycle frame according to claim 4, **characterised in that** mounted in the cylindrical seat (18) on either side of the bearing (31) is a sealing member (27) made of a low friction material.

7. A bicycle frame according to claim 2, **characterised in that** the axle (25) is rotatably mounted in the bushing (26) by means of a pair of bearings disposed side-by-side.

8. A bicycle frame according to claim 3, **characterised in that** the rear framework (11) has, on each side of the rear wheel, a respective arm (19) with a chain stay (20) having a lever portion (20a, 20b) with an end head (20c, 20d) adapted for being mounted onto a respective projecting end portion (26a, 26b) of the bushing (26).

9. A bicycle frame according to claim 8, **characterised in that** at least one (20a) of the lever portions (20a, 20b) has an end head (20c) with a through bore (34) adapted to be inserted on a projecting end portion (26a) of the bushing and to receive an annular locking member (35) defining an axially outer shoulder for said end portion (26a) of the bushing.

10. A bicycle frame according to claim 9, **characterised in that** the bore (34) is threaded for coupling with a corresponding thread of the annular locking member (35).

11. A bicycle frame according to claim 8, **characterised in that** at least one (20b) of the lever portions (20a, 20b) has an end head (20d) with a two-diameter through bore (36) defining:
- an outer bore portion (36a) of smaller diameter for the passage of one of the end portions of the axle (25);
- an inner bore portion (36b) adapted for receiving a projection end portion (26b) of the bushing (26); and
- a radial surface (36c) defining an axially outer shoulder for said projecting end portion (26b) of the bushing (26).

12. A bicycle frame according to claim 8, **characterised in that** the lever portions (20a, 20b) of the rear framework (11) are rigidly connected to one another by means of a rigid spacer member (40).

13. A bicycle frame according to claim 12, **characterised in that** the spacer member (40) has a transversal length substantially corresponding to that of a sleeve (17) of the main frame defining the cylindrical seat (18), whereby in the assembled condition the heads (20c, 20d) do not contact the sleeve (17).
